# EUROPÄISCHE PATENTSCHRIFT

(11) **EP 3 149 426 B1**
(45) Veröffentlichungstag und Bekanntmachung des Hinweises auf die Patenterteilung: **21.03.2018**
(21) Anmeldenummer: 15727919.1
(22) Anmeldetag: 27.05.2015
(51) Int. Cl.: F28F 19/02, B60H 1/32, B60H 3/00, F28F 19/04, F28F 19/06, F28D 21/00

(54) **VERDAMPFEREINRICHTUNG FÜR EINE KLIMAANLAGE**
EVAPORATOR FOR AIRCONDITIONING DEVICE
ÉVAPORATEUR D'UN DISPOSITIF DE CLIMATISATION

(30) Priorität: 28.05.2014 DE 102014210211
(43) Veröffentlichungstag der Anmeldung: 05.04.2017
(73) Patentinhaber: Mahle International GmbH, 70376 Stuttgart (DE)
(72) Erfinder: SCHAPER, Jörg, 70806 Kornwestheim (DE); FRANK, Hendrik, 71701 Schwieberdingen (DE)
(74) Vertreter: BRP Renaud & Partner mbB Rechtsanwälte Patentanwälte Steuerberater
(86) Internationale Anmeldenummer: PCT/EP2015/061733
(87) Internationale Veröffentlichungsnummer: WO 2015/181243

(56) Entgegenhaltungen:
- WO-A1-00/40658
- DE-A1-102005 027 934
- US-A- 3 658 581
- US-A- 5 305 827
- US-A- 5 514 478
- US-A- 6 102 994

## Beschreibung

Die Erfindung betrifft eine Verdampfereinrichtung für eine Klimaanlage sowie eine Klimaanlage mit einer solchen Verdampfereinrichtung. Die Erfindung betrifft ferner ein Kraftfahrzeug mit einer solchen Klimaanlage.

In der Klimatechnik wird eine Vorrichtung, in der ein komprimiert vorliegendes Kältemittel wieder entspannt und dabei in einen gasförmigen Aggregatszustand überführt wird, als Verdampfer bezeichnet. Die zum Sieden des Kältemittels erforderliche Energie, die sogenannte Verdampfungsenthalpie wird im Verdampfer dem zu kühlenden Medium, in einer Klimaanlage eines Kraftfahrzeugs also etwa der im Fahrzeuginnenraum vorhandenen Luft, entzogen, wobei sich diese stark abkühlt. Dies hat zumeist eine Kondensation von in der Luft enthaltenem Wasserdampf, typischerweise an den den Verdampfer ausbildenden Leitungswänden aus Metall, zur Folge. Dies kann zu einer unerwünschten Korrosion der Leitungswände führen. Darüber hinaus hat das sich an den Leitungswänden ansammelnde Kondensat oftmals die Ausbildung von Mikroorganismen auf der Leitungsoberfläche zur Folge, wodurch unangenehme Gerüche entstehen können, die von der zu kühlenden Luft vom Verdampfer ins Fahrzeuginnere transportiert werden können.

Aus dem Stand der Technik bekannte Gegenmaßnahmen umfassen daher das Aufbringen einer Schutzbeschichtung auf die Oberfläche der Verdampfer-Leitungswände.

So verfolgt etwa DE 100 45 606 A1 den Ansatz, ein metallisches Substrat, welches Teil einer Fahrzeug-Klimaanlage sein kann, mit einer oligodynamischen Oberflächenbeschichtung zu versehen. Diese umfasst eine Matrix auf Basis von Polysiloxanen sowie in die Matrix eingebettete Schwermetallpartikel. Zum Korrosionsschutz dient dabei ein Korrosionsinhibitor.

Die DE 10 2005 027 934 A1 offenbart eine hydrophile antimikrobielle Beschichtungszusammensetzung für einen Klimaanlagenverdampfer mit einem hydrophilen organischen Polymer, einem Glättungsmittel, einem antimikrobiellen Mittel und deionisiertem Wasser. Das hier verwendete antimikrobielle Mittel weist bis zu etwa 10 Massen-% Zinkoxid (ZnO) auf. Dieses Dokument zeigt daher den Oberbegriff des Anspruchs 1.

Die DE 601 32 514 T2 beschreibt schließlich ein Verfahren zur Herstellung eines hydrophilen Wärmetauschers, bei welchem zur Hydrophilierung Silikat-Teilchen und Polymere der Vinylalkohol-Reihen in einem wässrigen Medium verwendet werden.

Als problematisch an den vorangehend beschriebenen Maßnahmen erweist sich, dass die in herkömmlichen Schutzbeschichtungen typischerweise nur sehr geringe Biozid-Menge eine zeitlich begrenzte antimikrobielle Wirkung der Biozide bedingt, da diese zumeist bereits nach einer relativ kurzen Zeitspanne von dem an den Leitungswänden des Verdampfers zu Wasser kondensiertem Wasserdampf ausgewaschen werden.

Es ist daher eine Aufgabe der Erfindung, eine verbesserte Ausführungsform eines Verdampfers für eine Klimaanlage zu schaffen, bei welcher die genannten Nachteile weitgehend oder sogar vollständig beseitigt sind.

Diese Aufgabe wird durch den Gegenstand der unabhängigen Patentansprüche gelöst. Bevorzugte Ausführungsformen sind Gegenstand der abhängigen Patentansprüche.

Grundgedanke der Erfindung ist demnach, eine metallische Leitungswand eines Verdampfers mit einer Schutzbeschichtung auszustatten, die zu 40 bis 90 Massen-% aus Zinkoxid (ZnO)-Molekülen gebildet wird. Das in die Schutzschicht eingebrachte Zinkoxid dient im Bereich der Schichtoberfläche als sogenannte "Opferschicht", falls im Luftstrom vorhandene aggressive Substanzen wie z.B. organische oder anorganische Säuren - in Betracht kommen insbesondere Ameisensäure, Essigsäure, Salpetersäure, und schweflige Säure - sich auf der Leitungswand des Verdampfers niederschlagen. Besagte Zink-Ionen reagieren mit den Säurebestandteilen, wodurch diese neutralisiert werden können.

Der primäre, erfindungswesentliche Effekt des Zinkoxids besteht jedoch darin, dass beim Kontakt mit kondensiertem Wasserdampf eine antimikrobielle oder bakteriostatische Wirkung gegeben ist. Da das als Biozid wirkende Zinkoxid nur in geringem Maße wasserlöslich ist, kann die Ausbildung von Mikroorganismen auf den derart beschichteten Leitungswänden des Verdampfers über einen gegenüber herkömmlichen Verdampfern deutlich verlängerten Zeitraum verhindert werden. Die gewünschte Löslichkeit des Zinkoxids lässt sich dabei über die Zusammensetzung der - neben dem Zinkoxid - weiteren in der Schutzschicht vorhandenen Bestandteile einstellen.

Eine erfindungsgemäße Verdampfereinrichtung für eine Klimaanlage umfasst wenigstens eine Leitungswand aus einem Metall, insbesondere aus Aluminium. Die Leitungswand ist mit einer Schutzschicht versehen, welche 40-90 Massen-% an Zinkoxid aufweist. Selbstverständlich können nicht nur eine, sondern mehrere Leitungswände der Verdampfereinrichtung mit einer solchen Schutzschicht ausgestattet werden, etwa wenn die Verdampfereinrichtung als Plattenwärmetauscher mit einer Vielzahl von Fluidkanälen realisiert ist. Besonders gute Ergebnisse hinsichtlich der Beständigkeit gegenüber der Ausbildung von Mikroorganismen im Verdampfer werden erzielt, wenn alle relevanten Leitungswände mit einer solchen Schutzschicht ausgestattet werden.

Die antibakterielle Wirkung des Zinkoxids kann in einer bevorzugten Ausführungsform, in welcher das in der Schutzschicht vorhandene Zinkoxid mit Magnesium-Ionen oder mit Kupfer-Ionen dotiert wird, in nicht unerheblichem Maße verstärkt werden.

Dieselbe Wirkung lässt sich erzielen, wenn in das Zinkoxid - alternativ oder zusätzlich zu den genannten Magnesium- bzw. Kupfer-Ionen - eine organische Zinkverbindung, insbesondere Zinkpyrithion, eingebracht wurde.

In einer vorteilhaften Weiterbildung kann in der Schutzschicht als weiterer wesentlicher Bestandteil - neben dem bereits erörterten Zinkoxid - ein Polymer-Bindemittel vorgesehen werden, welches einen Anteil von 10 bis 50 Massen-% der Schutzschicht bilden kann. Die sich etwa bei einem Polymer-Bindemittel durch den Füllstoff Zinkoxid ergebende Hydrophilie der Schutzschicht sorgt dafür, dass das ausgefallene Wasser sich nicht in Tropfenform auf den Leitungswänden niederschlägt und von diesen abfließt, sondern dass sich vielmehr ein dünner und homogener Flüssigkeitsfilm ausbildet. Im Ergebnis kann dann das Kondenswasser besonders schnell von der Leitungswand-Oberfläche abgeführt werden, so dass deutlich weniger Wasser an den Leitungswänden abgelagert wird als bei herkömmlichen Verdampfern. Dies hat einen verbesserten Korrosionsschutz zur Folge. Gleichzeitig reinigt der stetig fließende Wasserfilm die Leitungswände des Verdampfers und wirkt somit der Ausbildung von Mikroorganismen entgegen.

In einer vorteilhaften Weiterbildung der Erfindung kann die Schutzschicht bis zu 10 Massen-% wenigstens eines Additivs umfassen. In Betracht mögen hierfür etwa ein Benetzungsmittel, ein Pigment ein Farbstoff oder ein geeigneter Inhibitor zur Vorbeugung von Korrosion kommen.

In einer weiteren alternativen Ausführungsform kann die Schutzschicht eine organisch-anorganische Hybridschicht umfassen. Unter dem Begriff "Hybridschicht" werden vorliegend generell all diejenigen Schichten verstanden, bei denen das schichtbildende Netzwerk sowohl organische als auch anorganische Bestandteile aufweist. Dies schließt sowohl Komposit-Netzwerke als auch interpenetrierende Netzwerke ausdrücklich mit ein. Beispielhaft seien etwa Mischungen von anorganischen Sol-Gel-Systemen mit organischen schichtbildenden Systemen genannt.

In einer anderen bevorzugten Ausführungsform kann die Schutzschicht eine Sol-Gel-Schicht umfassen. Unter dem Begriff "Sol-Gel-Schicht" seien vorliegend alle über einen dem Fachmann bekannten Sol-Gel-Prozess hergestellten anorganischen oder hybridpolymeren Schichtsysteme gefasst. Für die Herstellung einer Sol-Gel-Schicht werden die als Beschichtungslösungen herangezogenen Sole zunächst auf die Substrat-Oberfläche aufgebracht. Während des gesamten Beschichtungsvorgangs und dem Trocknen des Sols führen die Hydrolyse- und Kondensationsreaktionen der verwendeten Prekursor-Moleküle im Ergebnis dazu, dass aus den Sol-Teilchen über einen gelartigen Zwischenzustand eine feste Schicht gebildet wird.

Besonders gute Ergebnisse hinsichtlich der Vermeidung der Ausbildung unerwünschter Mikroorganismen auf den Leitungswänden lassen sich erzielen, wenn die Schutzschicht mit einer Schichtdicke von 0,5 µm bis 20 µm versehen wird. Darüber hinaus kann durch eine solche Ausbildung der Schutzschicht mit geringer Schichtdicke sichergestellt werden, dass die im Verdampfer typischerweise vorhandenen, kiemenartigen Öffnungen nicht auf unerwünschte Weise durch die Schutzschicht verschlossen werden.

Als besonders vorteilhaft erweist es sich, wenn die Schutzschicht Zinkoxid mit einer Partikelgröße aufweist, die weniger als 10 µm beträgt. Bis zu dieser Größe sind die Zinkoxid-Partikel besonders gut löslich.

Besonders zweckmäßig kann die Schutzschicht mittels eines Tauchverfahrens auf die Leitungswand aufgebracht sein. Die Schicht kann aber auch mittels eines Plasmaverfahrens, insbesondere bei Atmosphärendruck, erzeugt werden, wobei das Zinkoxid verdampft und auf der Oberfläche der Leitungswand abgeschieden wird. Hierbei können mitverdampfende organische, vor allem Si-organische oder anorganische Prekursoren, beigemengt sein.

Die Erfindung betrifft weiterhin eine Klimaanlage mit einem Kompressor und einer mit dem Kompressor zusammenwirkenden Verdampfereinrichtung mit einem oder mehreren der vorangehend genannten Merkmale. Die Erfindung betrifft ferner ein Kraftfahrzeug mit einer solchen Klimaanlage.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

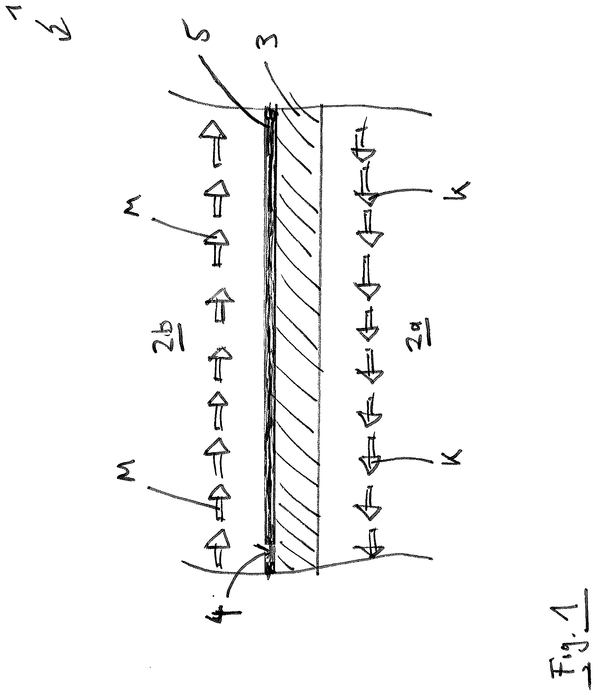

Die einzige Figur 1 illustriert in einer grobschematischen Darstellung ein Beispiel einer erfindungsgemäßen Verdampfereinrichtung 1 für eine Klimaanlage. Eine Leitungswand 3 aus einem Metall wie z.B. Aluminium dient als Trennwand zwischen zwei Fluidkanälen 2a, 2b, wobei der erste Fluidkanal 2a von einem Kältemittel K und der zweite Fluidkanal 2b von dem zu kühlenden Medium M, typischerweise Luft, durchströmt wird. Durch thermische Wechselwirkung zwischen Kältemittel K und zu kühlendem Medium M durch die Leitungswand 3 hindurch wird dem Medium M Wärme entzogen und dem Kältemittel K zugeführt, wobei das flüssige Kältemittel K verdampfen kann. Im Medium M enthaltener Wasserdampf kann bei diesem Vorgang kondensieren und auf der dem zweiten Fluidkanal 2b zugewandten Seite 4 der Leitungswand 3 zu Wasser ausfallen. Daher ist auf dieser Seite 4 der Leitungswand 3 eine Schutzschicht 5 zum simultanen Schutz vor Korrosion, zur Verhinderung der Ansiedlung von Mikroorganismen sowie zur Hydrophilierung aufgebracht, die beispielsweise eine Schichtdicke von 0,5 µm bis 20 µm aufweisen kann. Die Schutzschicht 5 kann mittels eines Plasma- oder Tauchverfahrens auf die dem zu kühlenden Medium M, also typischerweise Luft zugewandte, Seite 4 der Leitungswand 3 aufgebracht werden.

Die Schutzschicht 5 weist als zentralen Bestandteil Zinkoxid (ZnO) auf, welches 40-90 Massen-% der Schutzschicht 5 bildet. Weitere 10 bis 50 Massen-% können durch ein Polymer-Bindemittel - so beispielsweise Polyurethan, Polyvinylalkohol, Polyacrylat, Polyepoxy - gebildet werden, welches zur Versiegelung der Leitungswand 3 dienen mag. Die sich durch die Kombination des Polymer-Bindemittels mit dem Füllstoff Zinkoxid ergebende Hydrophilität der Schutzschicht sorgt dafür, dass sich das durch Kondensation ausfallende Wasser nicht in Tropfenform auf den Leitungswänden niederschlägt, sondern sich ein dünner und homogener Flüssigkeitsfilm ausbildet. Somit kann das Kondenswasser besonders schnell von der Leitungswand-Oberfläche abgeführt werden.

Die antibakterielle Wirkung der Schutzschicht kann in einer Variante des Beispiels weiter verstärkt werden, in welcher das in der Schutzbeschichtung vorhandene Zinkoxid mit Magnesium-Ionen und/oder Kupfer-Ionen dotiert wird. Um dieselbe Wirkung zu erzielen oder diese nochmals zu verstärken, kann alternativ bzw. auch eine organische Zinkverbindung wie beispielsweise Zinkpyrithion zusätzlich in das Zinkoxid eingebracht werden.

Schließlich können auch bis zu 10 Massen-% an weiteren Additiven in der Schutzschicht 5 vorgesehen werden. Ein solches Additiv mag etwa ein weiteres geeignetes Biozid sein. In Betracht kommt aber auch ein Benetzungsmittel, ein Pigment ein Farbstoff oder ein geeigneter Inhibitor zur Vorbeugung von Korrosion.

In einer Variante des Beispiels kann die Schutzschicht auch als organisch-anorganische Hybridschicht ausgebildet sein. Unter dem Begriff "Hybridschicht" sind dabei all diejenigen Schichten gefasst, bei denen das schichtbildende Netzwerk sowohl organische als auch anorganische Bestandteile aufweist. Ausdrücklich umfasst sind auch Kompositnetzwerke sowie interpenetrierende Netzwerke.

In einer weiteren Variante kann die Schutzbeschichtung eine Sol-Gel-Schicht umfassen, die mittels eines sogenannten Sol-Gel-Prozesses hergestellt wurde und anorganische oder hybridpolymere Schichtsysteme umfasst. Für die Herstellung der Sol-Gel-Schicht werden die als Beschichtungslösungen herangezogenen Sole zunächst auf die Substrat-Oberfläche aufgebracht. Während des gesamten Beschichtungsvorgangs und dem Trocknen des Sols führen die Hydrolyse- und Kondensationsreaktionen der verwendeten Prekursor-Moleküle dann dazu, dass aus den Sol-Teilchen über einen gelartigen Zwischenzustand die gewünschte feste Schicht gebildet wird.

## Patentansprüche

1. Verdampfereinrichtung (1) für eine Klimaanlage,
- mit wenigstens einer Leitungswand (3) aus einem Metall, insbesondere aus Aluminium, und
- mit einer auf der Leitungswand (3) vorgesehenen Schutzschicht (5),
**dadurch gekennzeichnet, dass** die Schutzschicht 40-90 Massen-% Zinkoxid (ZnO) aufweist.

2. Verdampfereinrichtung nach Anspruch 1,
**dadurch gekennzeichnet, dass**
das Zinkoxid mit Magnesium-Ionen und/oder mit Kupfer-Ionen dotiert ist.

3. Verdampfereinrichtung nach Anspruch 1 oder 2,
**dadurch gekennzeichnet, dass**
das Zinkoxid eine organische Zinkverbindung, insbesondere Zinkpyrithion, umfasst.

4. Verdampfereinrichtung nach einem der Ansprüche 1 bis 3,
**dadurch gekennzeichnet, dass**
die Schutzschicht (5) zur Oberflächenversiegelung 10 bis 50 Massen-% eines Polymer-Bindemittels umfasst.

5. Verdampfereinrichtung nach einem der vorhergehenden Ansprüche,
**dadurch gekennzeichnet, dass**
die Schutzschicht (5) bis zu 10 Massen-% wenigstens eines Additivs umfasst.

6. Verdampfereinrichtung nach Anspruch 1,
**dadurch gekennzeichnet, dass**
die Schutzschicht (5) als organisch-anorganische Hybridschicht ausgebildet ist.

7. Verdampfereinrichtung nach Anspruch 1,
**dadurch gekennzeichnet, dass**
die Schutzschicht (5) eine Sol-Gel-Schicht umfasst.

8. Verdampfereinrichtung nach einem der vorhergehenden Ansprüche,
**dadurch gekennzeichnet, dass**
die Schutzschicht (5) eine Schichtdicke von 0,5 µm bis 20 µm aufweist.

9. Verdampfereinrichtung (1) nach einem der vorhergehenden Ansprüche,
**dadurch gekennzeichnet, dass**
die Schutzschicht (5) Zinkoxid mit einer Partikelgröße < 10 µm aufweist.

10. Verdampfereinrichtung nach einem der vorhergehenden Ansprüche,
**dadurch gekennzeichnet, dass**
die Schutzschicht (5) mittels eines Tauchverfahrens oder eines Plasmaverfahrens auf die wenigstens eine Leitungswand (3) aufgebracht ist.

11. Klimaanlage, insbesondere für ein Kraftfahrzeug,
mit einem Kompressor und mit einer mit dem Kompressor zusammenwirkenden Verdampfereinrichtung (1) nach einem der vorhergehenden Ansprüche.

12. Kraftfahrzeug mit einer Klimaanlage nach Anspruch 11.

## Claims

1. An evaporator (1) for an air-conditioning system,
- comprising at least one pipe wall (3) made of a metal, in particular aluminium, and
- comprising a protective layer (5) provided on the pipe wall (3), **characterised in that** the protective layer comprises 40-90% by mass of zinc oxide (ZnO).

2. The evaporator according to claim 1,
**characterised in that**
the zinc oxide is doped with magnesium ions and/or copper ions.

3. The evaporator according to claim 1 or 2,
**characterised in that**
the zinc oxide comprises an organic zinc compound, in particular zinc pyrithione.

4. The evaporator according to any one of claims 1 to 3,
**characterised in that**
for surface sealing, the protective layer (5) comprises 10 to 50% by mass of a polymer binder.

5. The evaporator according to any one of the preceding claims,
**characterised in that**
the protective layer (5) comprises up to 10% by mass of at least one additive.

6. The evaporator according to claim 1,
**characterised in that** the protective layer (5) is formed as an organic-inorganic hybrid layer.

7. The evaporator according to claim 1,
**characterised in that**
the protective layer (5) comprises a sol-gel layer.

8. The evaporator according to any one of the preceding claims,
**characterised in that**
the protective layer (5) has a layer thickness of 0.5µm to 20µm.

9. The evaporator (1) according to any one of the preceding claims,
**characterised in that**
the protective layer (5) comprises zinc oxide with a particle size < 10µm.

10. The evaporator according to any one of the preceding claims,
**characterised in that**
the protective layer (5) is applied on the at least one pipe wall (3) by means of a dipping method or a plasma method.

11. An air-conditioning system, in particular for a motor vehicle,
comprising a compressor and an evaporator (1) according to any one of the preceding claims working together with the compressor.

12. A motor vehicle comprising an air-conditioning system according to claim 11.

## Revendications

1. Dispositif d'évaporation (1) pour une installation de climatisation,
- avec au moins une paroi de conduite (3) en un métal, en particulier en aluminium,
et
- avec une couche de protection (5) prévue sur la paroi de conduite (3),
**caractérisé en ce que** la couche de protection présente 40 à 90 % en masse d'oxyde de zinc (ZnO).

2. Dispositif d'évaporation selon la revendication 1,
**caractérisé en ce que**
l'oxyde de zinc est dopé avec des ions de magnésium et/ou des ions de cuivre.

3. Dispositif d'évaporation selon la revendication 1 ou 2,
**caractérisé en ce que**
l'oxyde de zinc comporte un composé de zinc organique, en particulier de pyrithione de zinc.

4. Dispositif d'évaporation selon l'une quelconque des revendications 1 à 3,
**caractérisé en ce que**
la couche de protection (5) comporte pour le scellement de surface 10 à 50 % en masse d'un agent liant de polymère.

5. Dispositif d'évaporation selon l'une quelconque des revendications précédentes,
**caractérisé en ce que**
la couche de protection (5) comporte jusqu'à 10% en masse d'au moins un additif.

6. Dispositif d'évaporation selon la revendication 1,
**caractérisé en ce que**
la couche de protection (5) est réalisée comme une couche hybride organique-anorganique.

7. Dispositif d'évaporation selon la revendication 1,
**caractérisé en ce que**
la couche de protection (5) comporte une couche sol-gel.

8. Dispositif d'évaporation selon l'une quelconque des revendications précédentes,
**caractérisé en ce que**
la couche de protection (5) présente une épaisseur de couche de 0,5 µm à 20 µm.

9. Dispositif d'évaporation selon l'une quelconque des revendications précédentes,
**caractérisé en ce que**
la couche de protection (5) présente de l'oxyde de zinc avec une grandeur de particule < 10 µm.

10. Dispositif d'évaporation selon l'une quelconque des revendications précédentes,
**caractérisé en ce que**
la couche de protection (5) est appliquée au moyen d'un procédé d'immersion ou d'un procédé au plasma sur l'au moins une paroi de conduite (3).

11. Installation de climatisation, en particulier pour un véhicule automobile,
avec un compresseur et avec un dispositif d'évaporation coagissant avec le compresseur (1) selon l'une quelconque des revendications précédentes.

12. Véhicule automobile avec une installation de climatisation selon la revendication 11.
